# EUROPEAN PATENT SPECIFICATION

(11) **EP 2 739 156 B1**
(45) Date of publication and mention of the grant of the patent: **17.06.2015**
(21) Application number: 12778399.1
(22) Date of filing: 01.08.2012
(51) Int. Cl.: A21D 15/02, A23L 1/00, A23L 1/212, A21D 13/00

(54) **FROZEN PREPARATION FOR SAVORY SOUFFLÉS**
GEFRORENEN ZUBEREITUNG FÜR SCHMACKHAFTE SCHAUMSPEISEN
PREPARATION CONGELEE POUR SOUFFLES SALES

(30) Priority: 02.08.2011 FR 1157081; 02.08.2011 US 201161514091 P
(43) Date of publication of application: 11.06.2014
(73) Proprietor: Brule, René-Louis, 78590 Noisy Le Roi (FR)
(72) Inventor: Brule, René-Louis, 78590 Noisy Le Roi (FR)
(74) Representative: Agasse, Stéphane
(86) International application number: PCT/IB2012/001999
(87) International publication number: WO 2013/017956

(56) References cited:
- EP-A1- 0 071 054
- FR-A1- 2 346 987
- FR-A1- 2 744 882
- GB-A- 2 252 892

## Description

The present invention relates to a method for producing a frozen preparation for a savory soufflé, as well as the frozen preparation thus obtained. The invention also relates to a method for preparing a savory soufflé from a frozen preparation, and the savory soufflé thus obtained.

Sweet soufflés, also called cream dessert soufflés, are known as light preparations. Sweet soufflés generally include two basic elements, more specifically a custard and stiff peak egg whites. The egg whites are incorporated into the custard, then the mixture is poured into a soufflé dish and is then baked at 230°C for 15 to 20 minutes.

Savory soufflés also exist that are intended to be served at the beginning of a meal rather than as dessert. Savory soufflés generally also include stiff peak egg whites.

Due to the presence of these stiff peak egg whites, the volume of the soufflé, whether sweet or savory, increases at moderate heat. Soufflés are also known for having to be prepared at the last minute to prevent collapse. In fact, they must be served and consumed immediately after leaving the oven to avoid the problem of fallen soufflés, which are no longer presentable, and no longer have the desired gustatory qualities. The soufflé is therefore a culinary preparation that has the drawback of not being able to be prepared far in advance.

Soufflés also have the drawback of being very difficult to freeze. Different proposals have been made to resolve this technical problem.

Patent FR2744882 proposes culinary compositions for sweet soufflés with a base of fruit purées and that do away with liquid, water or milk, egg yolks, and flour. These compositions are presented as being able to be frozen before cooking and being able to be cooked without defrosting. These compositions are essentially made up of meringue and are related to "blancmange."

Patent FR2346987 proposes a freezable culinary preparation for sweet soufflés. The invention lies in the incorporation of the custard into an uncooked cream puff paste before adding egg whites, resulting in a soufflé preparation that can be frozen. The culinary preparation is therefore made up of a homogenous mixture of a cooked custard, an uncooked cream puff paste, and stiff meringue egg whites.

The culinary preparation described according to FR2346987 is made up of ingredients intended for a sweet dish, which can be served at the end of the meal as dessert or as a snack. This preparation is therefore not suitable for preparing a savory soufflé.

The present invention proposes a method for manufacturing a frozen preparation for savory soufflés, and the frozen preparation thus obtained.

The present invention also proposes a frozen preparation for savory soufflés that can be kept in the freezer for a long time, said soufflé preparation keeping its lightness properties that characterize the soufflé.

Quite often, chefs who wish to obtain egg whites with firmer stiff peaks are forced to allow the egg whites to age in the refrigerator for several days. The method according to the present invention makes it possible to obtain very firm stiff peak egg whites without having to leave the whites in the refrigerator before whipping them. The invention therefore has this other advantage.

The present invention thus proposes a method for making a frozen preparation for a savory soufflé, comprising the following steps:
a) a base is prepared for a cream puff paste from least the following four ingredients: water or milk, fat, flour, and egg;
b) a béchamel sauce is prepared from at least the following three ingredients: water or milk, fat, and flour;
c) the béchamel sauce obtained in step b) is incorporated into the cream puff paste base obtained in step a), and the mixture is kept in a double boiler at a temperature not to exceed 70°C;
d) egg whites are whipped to a stiff peaks stage;
e) sugar and melted gelatin are incorporated into the egg whites obtained in step d), said sugar being added in an egg white:sugar ratio comprised between 25:1 and 100:1, and said gelatin being added in an egg white:gelatin ratio comprised between 20:1 and 100:1;
f) the mixture obtained in step c) is removed from the double boiler, and the egg whites obtained in step e) are incorporated into said hot mixture;
g) the mixture obtained in step f) is placed in a soufflé dish; and
h) the soufflé preparation is frozen immediately at a temperature of at least -10°C.

The inventor realized that implementing such a method makes it possible to obtain a preparation that has the required characteristics to make a savory soufflé. Furthermore, this method makes it possible to keep the savory soufflé preparation in the freezer for more than two months. More specifically, the method according to the invention uses sugar and gelatin mixed with the stiff peak egg whites. The inventor realized that this step makes it possible to obtain a preparation that has the lightness characteristics of a soufflé. This step is integrated into the preparation of a savory soufflé, for example to be served at the beginning of the meal. Lastly, this step also makes it possible to keep the soufflé preparation in the freezer without losing the expected properties of a soufflé, in particular visual, gustatory, nutritional, and therefore edible properties of savory soufflés.

According to the inventive method, the stiff peak egg whites thus obtained are very firm, which favors the mixing of the three basic components of the freezable culinary preparation according to the invention.

Such a method also makes it possible to obtain a more homogenous soufflé preparation, which favors conservation of the product.

The present invention therefore relates to a method for making a frozen savory soufflé preparation. The term "freezable" may now be used as an equivalent for the term "frozen." The savory soufflé preparation is in fact freezable and frozen.

According to a first step, a cream puff paste mixture is prepared from the following four ingredients: water or milk, fat, flour, and egg. These four ingredients make up the minimum necessary to prepare a cream puff paste. "Fat" primarily refers to butter, margarine, and vegetable fat. It may nevertheless be an edible oil or any food compositions including triglycerides. "Flour" primarily refers to wheat flour, for example the white flour used for pastries and cakes. It may for example be type 45 or 55 flour. Other ingredients may potentially be added to the cream puff paste mixture. In particular, these additional ingredients are in particular chosen from among salt, sugar, and flavorings.

It is important to note that the cream puff paste here is not cooked before it is mixed with the custard.

As an example, the ingredients for the cream puff paste are the following: 250 g of water or milk, 100 g of butter or margarine, 150 g of flour, and 250 g of eggs.

Another example of the ingredients necessary to prepare 1 liter of cream puff paste mixture according to the invention is the following: 1 liter of water, 15 g of caster sugar, 15 g of salt, 400 g of butter, 600 g of flour, 18 to 20 eggs.

The protocol for preparing the cream puff paste mixture is the following:
i) the liquid mixture, water or milk and fat, is brought to a boil;
ii) once boiling, it is removed from the heat, the flour is added all at once, and it is stirred vigorously;
iii) it is returned to the heat (high heat), and the obtained paste is dried for several minutes, for example 2 to 3 minutes or 3 to 4 minutes; and
iv) it is removed from the heat, and the eggs are added one after the other.

The second step of the method according to the invention consists of preparing a béchamel sauce from the following three ingredients: milk (skim, half-cream or whole) or water, fat, and flour. These three ingredients make up the minimum necessary to prepare a béchamel sauce. Other ingredients may potentially be added to the custard. More specifically, these additional ingredients are in particular chosen from grated cheeses (in particular Gruyère, Emmental, and Parmesan), flavorings, and natural juices, for example reduced by cooking.

As an example, a béchamel sauce is prepared from the following ingredients: 100 g of fat, 100 g of flour, 1 I of milk, 100 g of grated Gruyère.

The protocol for preparing the béchamel sauce is the following:
i) the fat is melted in a saucepan;
ii) the flour is added, then it is left to cook for 2 to 4 minutes;
iii) the milk is incorporated gradually, for example 20 cl at a time, while stirring;
iv) the grated Gruyère is incorporated, then it is left to cook for 2 to 4 minutes.

The third step consists of incorporating the béchamel sauce obtained in the second step of the method into the cream puff paste base obtained in the first step of the method, then keeping the mixture in the double boiler at a temperature below 70°C. For example, the mixture may be kept at a temperature comprised between 40 and 60°C. Advantageously, the mixture is kept at approximately 60°C. According to the invention, the béchamel sauce is incorporated into the cream puff paste, so as to obtain a completely homogenous mixture. It will be noted that alternatively, the cream puff paste can be added to the béchamel sauce.

According to one aspect of the invention, it is possible to add one or more additional ingredients to the mixture obtained in the third step. These ingredients are intended to give the savory soufflé a particular flavor. These additional ingredients are in particular chosen from scents, flavorings (e.g. fish stock, veal stock), spices (e.g. curry, cumin), vegetables, concentrates, and vegetable purées (for example tomato, artichoke, asparagus, broccoli, green beans, pumpkin, ambercup, chestnut, tomato paste), meats (for example, poultry), fish and seafood (for example, lobster), cheeses (for example, cow, goat, sheep cheese), pastas (plain or with parsley), and natural juices (for example, reduced by cooking).

The fourth step of the method according to the invention consists of whipping the egg whites to the stiff peaks stage. A pinch of salt may be added to facilitate the process.

The fifth step of the method consists of incorporating sugar and melted gelatin into the egg whites obtained in the preceding step, i.e. the egg whites whipped to the stiff peaks stage.

The egg whites:sugar weight ratio is comprised between 25:1 and 100:1, advantageously between 30:1 and 70:1 or between 40:1 and 60:1. For example, 5 g of sugar are added to 8 egg whites whipped to the stiff peaks stage. In that case, inasmuch as 8 egg whites weigh 250 g, the egg whites:sugar weight ratio is 50:1.

The egg whites:gelatin ratio is comprised between 20:1 and 100:1, advantageously between 25:1 and 60:1 or between 33:1 and 50:1. As an example, 6 g of gelatin are added to 8 egg whites whipped to the stiff peaks stage. In that case, inasmuch as 8 egg whites weigh 250 g, the egg whites: gelatin weight ratio is 42:1.

The egg whites whipped to the stiff peaks stage according to this process are firmer than the egg whites whipped to stiff peaks using a traditional process. This has the advantage of facilitating their mixing with other components of the soufflé.

The inventor also realized that the step of the method made it possible to keep the preparation in the freezer for a longer period of time, while keeping the gustatory and nutritional properties of the product. Such a method therefore makes it possible to consider industrial production of the product obtained using the method and the marketing thereof. This is one significant advantage of the present invention.

Using such a step also makes it possible to obtain a more homogenous preparation for savory soufflés.

A sixth step of the method consists of removing the cream puff paste-custard mixture (obtained in the third step of the method according to the invention) from the double boiler and incorporating the egg whites previously prepared into that hot mixture.

According to a seventh step of the method according to the invention, the mixture obtained in the sixth step is placed in a soufflé bowl/dish/mold.

According to an eighth step, the soufflé preparation is frozen immediately at a temperature of at least -10°C.

According to one aspect of the invention, the preparation is frozen at a temperature comprised between -10°C and -20°C.

"Immediately" means that the preparation must not stay at room temperature for more than a half-hour, advantageously more than a quarter hour after the end of its preparation.

Freezing keeps the temperature at the center of the food at a negative temperature, for example -15°C or -18°C, which makes it possible to preserve it. Some foodstuffs are nevertheless capable of being kept longer than others, in particular depending on their ingredients. The inventor has now observed that adding a specific step to the usual soufflé preparation method led to improving the conservation time of the savory soufflé preparation in the freezer, while preserving the expected properties of the soufflé (in particular taste, consistency and appetence).

According to the invention, it is preferable to freeze the savory soufflé preparation slowly, rather than quickly (or deep freezing).

According to one aspect of the invention, the béchamel sauce:cream puff paste:egg whites ratio is comprised between 1:1:2 and 1.2:1.5:3, determined from the weight of each ingredient in the finished product.

For information, the proportions of each basic component in the final preparation may be the following:

| | Béchamel sauce | Cream puff paste | Stiff peak egg whites | Weight ratio |
|---|---|---|---|---|
| Mixture A | 100 g | 100 g | 250 g | 1:1:2.5 |
| Mixture B | 100 g | 150 g | 250 g | 1:1.5:2.5 |
| Mixture C | 120 g | 100 g | 250 g | 1.2:1:2.5 |
| Mixture D | 110 g | 140 g | 260 g | 1.1:1.4:2.6 |
| Mixture E | 120 g | 140 g | 300 g | 1.2:1.4:3 |
| Mixture F | 120 g | 150 g | 220 g | 1.2:1.5:2.2 |

The present invention also relates to a frozen savory soufflé preparation obtained using the manufacturing method according to the invention.

The frozen savory soufflé preparation obtained using the method according to the present invention has the advantageous property of being able to be kept in the freezer longer than the preparations of the prior art. This property results directly from the manufacturing method for the freezable preparation.

The savory soufflé preparation according to the present invention may potentially comprise food additives and/or preservatives. Food additives in particular include chemical preservatives (E200 to E297), which are used to extend the shelf life of the food. These may for example be mineral preservatives (sodium chloride, sodium and potassium nitrates and nitrites, sulfur dioxide and sulfites, carbon dioxide, hydrogen peroxide or perhydrol) or organic preservatives (saturated fatty acids and sodium salts, potassium or calcium, sorbic acid and calcium, sodium, and potassium sorbates, benzoic acid and its derivatives, the other organic acids, alcohols, phenolic antioxidants).

According to one aspect of the present invention, the savory soufflé preparation according to the present invention has no preservatives.

The present invention also relates to a method for preparing a savory soufflé from a frozen preparation according to the invention, consisting of heating said preparation to a temperature comprised between 180 and 250°C, preferably between 200 and 230°C for a length of time that depends on the weight of the frozen preparation. For example, a soufflé preparation placed in a soufflé dish with a diameter comprised between 6.5 and 8 cm must be baked at approximately 200°C for 15 to 18 min.

According to one aspect of the invention, the frozen soufflé preparation is taken out of the freezer approximately 20 minutes before it is baked in the oven. This means that the frozen preparation remains at room temperature for a certain period of time before being placed in the oven.

According to another aspect of the invention, the soufflé preparation is taken out of the freezer at the last minute, then placed in a microwave oven (in particular, defrost mode) for a very short period of time (for example, less than 2 minutes) before being baked in the traditional oven. This has an obvious advantage relative to the service time, in particular in a fast food setting, in situations where customers wish to be served very quickly, or in situations where customers do not wish to order their desert far enough in advance to use the traditional method (20 minutes at ambient temperature).

According to still another aspect of the present invention, the frozen preparation is placed in a soufflé dish measuring 6 to 10 cm in diameter, and is baked until the soufflé reaches a height of 1 to 6 cm.

The invention also relates to a savory soufflé obtained using the method described above.

### Examples

### Example 1

A frozen savory soufflé preparation is made from the following mixture of ingredients:
- 100 g of béchamel sauce
- 100 g of cream puff paste
- 250 g of stiff peak egg whites with 5 g of sugar and 6 g of gelatin
- 10 g of tomato paste

The béchamel sauce:cream puff paste:egg whites weight ratio is 1:1:2.5, determined from the weight of each ingredient in the finished product.

### Example 2

A frozen savory soufflé preparation is made from the following mixture of ingredients:
- 100 g of béchamel sauce
- 100 g of cream puff paste
- 250 g of stiff peak egg whites with 5 g of sugar and 6 g of gelatin
- 50 g of asparagus purée

The béchamel sauce:cream puff paste:egg whites weight ratio is 1:1:2.5, determined from the weight of each ingredient in the finished product.

### Example 3

A frozen savory soufflé preparation is made from the following mixture of ingredients:
- 100 g of cream puff paste
- 100 g of béchamel sauce
- 250 g of stiff peak egg whites with 5 g of sugar and 6 g of gelatin
- 50 g of grated cheese

The béchamel sauce:cream puff paste:egg whites weight ratio is 1:1:2.5, determined from the weight of each ingredient in the finished product.

### Protocol for making the soufflé preparation

### 1. Preparation of one liter of mixture for cream puff paste

i) bring 1 liter of water and 400 g of butter to a boil;
ii) once boiling, remove from heat, add 600 g of flour all at once, and stir vigorously;
iii) return to high heat and dry the obtained paste for 2 to 3 minutes; and
iv) remove from heat and add 18 eggs one after the other (2 by 2).

### 2. Preparation of one liter of béchamel sauce

i) melt 100 g of butter in a saucepan;
ii) add 100 g of flour, then let cook for 2 to 4 minutes;
iii) incorporate 1 liter of milk, in 5 additions, i.e. 20 cl at a time, while stirring;
iv) incorporate 10 g of salt and 2 or 3 g of pepper (white or black), and
v) incorporate 100 g of grated Gruyère, then let cook for 2 to 4 minutes.

### 3. Cream puff paste and béchamel sauce mixture

The third step consists of incorporating the predetermined quantity (for example, 100 g) of hot béchamel sauce into the predetermined quantity (for example, 100 g) of cream puff paste base, then keeping the mixture in a double boiler at a temperature of 60°C. 4. Preparation of one and a half liters of stiff peak egg whites, or approximately 48 egg whites.

The egg whites are whipped to firm peaks using a whisk, after adding a pinch of salt.

### 5. Addition of sugar and gelatin

The necessary quantity (for example, 6 g) of gelatin sheets is softened in a container including cold water. The gelatin sheets are then placed in an empty saucepan and melted.

The necessary quantity (for example, 5 g) of sugar is then added to the predetermined quantity of stiff peak egg whites (for example, 250 g, which corresponds to 8 egg whites), then the melted gelatin. The egg whites:sugar weight ratio and egg whites:gelatin weight ratio are respectively 50:1 and 42:1.

### 6. Finishing the freezable preparation

The cream puff paste-béchamel sauce mixture is removed from the double boiler, and the vegetable purées, tomato paste and/or other flavor ingredients are incorporated into the hot mixture, then the previously prepared egg whites. The mixture thus obtained is placed in a soufflé bowl/mold/dish with a diameter of 8 cm and an approximate capacity of 135 cm³. The inside of the soufflé bowl is greased (using butter or margarine) and floured beforehand.

The soufflé bowl containing the soufflé preparation is then immediately placed in the freezer (-15°C).

The dish is then kept at a temperature of -18°C for 8 months.

### Protocol for preparing the soufflé from a frozen preparation

The soufflé preparation is taken out of the freezer at the last minute (before being served), then placed in the microwave oven (defrost setting) for 1 minute and 20 seconds before being baked in the traditional oven for 16 min.

The soufflé thus obtained preserves its visual and gustatory properties.

## Claims

1. A method for making a frozen preparation for a savory soufflé, comprising the following steps:
a) a base is prepared for a cream puff paste from least the following four ingredients: water or milk, fat, flour, and egg;
b) a béchamel sauce is prepared from at least the following three ingredients: water or milk, fat, and flour;
c) the béchamel sauce obtained in step b) is incorporated into the cream puff paste base obtained in step a), and the mixture is kept in a double boiler at a temperature not to exceed 70°C;
d) egg whites are whipped to a stiff peaks stage;
e) sugar and melted gelatin are incorporated into the egg whites obtained in step d), said sugar being added in an egg white:sugar ratio comprised between 25:1 and 100:1, and said gelatin being added in an egg white:gelatin ratio comprised between 20:1 and 100:1;
f) the mixture obtained in step c) is removed from the double boiler, and the egg whites obtained in step e) are incorporated into said hot mixture;
g) the mixture obtained in step f) is placed in a soufflé dish; and
h) the soufflé preparation is frozen immediately at a temperature of at least -10°C.

2. The method according to claim 1, wherein the egg whites:sugar weight ratio of step e) is comprised between 30:1 and 70:1.

3. The method according to any one of the preceding claims, wherein the egg whites: gelatin ratio of step e) is comprised between 25:1 and 60:1.

4. The method according to any one of the preceding claims, wherein the béchamel sauce: cream puff paste:egg whites ratio is comprised between 1:1:2 and 1.2:1.5:3, determined from the weight of each ingredient in the finished product.

5. The method according to any one of the preceding claims, wherein the béchamel sauce comprises butter, flour, milk, and grated cheese.

6. A frozen savory soufflé preparation obtained using the manufacturing method according to any one of claims 1 to 5.

7. The frozen preparation according to claim 6, also including at least one additional ingredient chosen from scents, flavorings (e.g. fish stock, veal stock), spices (e.g. curry, cumin), vegetables, concentrates, and vegetable purées (for example tomato, artichoke, asparagus, broccoli, green beans, pumpkin, ambercup, chestnut, tomato paste), meats (for example, poultry), fish and seafood (for example, lobster), cheeses (for example, cow, goat, sheep cheese), pastas (plain or with parsley), and natural juices (for example, reduced by cooking).

8. A method for preparing a savory soufflé from a frozen preparation according to claim 6 or 7, consisting of baking said frozen preparation at a temperature comprised between 180 and 250°C.

9. The method according to claim 8, wherein the frozen preparation placed in a soufflé bowl with a diameter of 6 to 10 cm is baked until the soufflé reaches a height of 1 to 6 cm.

10. A savory soufflé obtained using the method according to claim 8 or 9.

## Patentansprüche

1. Verfahren zur Herstellung einer gefrorenen Zubereitung für ein herzhaftes Soufflé, wobei das Verfahren die folgenden Schritte umfasst:
a) eine Basis wird für einen Windbeutelteig aus mindestens den folgenden vier Zutaten zubereitet: Wasser oder Milch, Fett, Mehl und Ei;
b) eine Béchamelsauce wird aus mindestens den folgenden drei Zutaten zubereitet: Wasser oder Milch, Fett und Mehl;
c) die in Schritt b) erhaltene Béchamelsauce wird in die in Schritt a) erhaltene Windbeutelteigbasis eingebracht und die Mischung wird in einem Wasserbad bei einer Temperatur, die 70 °C nicht überschreiten darf, gehalten;
d) Eiweiß wird zu einem steifen Schnee geschlagen;
e) Zucker und geschmolzene Gelatine werden das in Schritt d) erhaltene Eiweiß eingebracht, wobei der Zucker in einem Eiweiß:Zucker-Verhältnis, das zwischen 25:1 und 100:1 liegt, zugegeben wird und die Gelatine in einem Eiweiß:Gelatine-Verhältnis, das zwischen 20:1 und 100:1 liegt, zugegeben wird;
f) die in Schritt c) erhaltene Mischung wird aus dem Wasserbad genommen und das in Schritt e) erhaltene Eiweiß wird in die heiße Mischung eingebracht;
g) die in Schritt f) erhaltene Mischung wird in eine Souffléform gegeben und
h) die Soufflézubereitung wird unmittelbar bei einer Temperatur von mindestens -10 °C eingefroren.

2. Verfahren nach Anspruch 1, wobei das Eiweiß:Zucker-Gewichtsverhältnis von Schritt e) zwischen 30:1 und 70:1 liegt.

3. Verfahren nach einem der vorhergehenden Ansprüche, wobei das Eiweiß:Gelatine-Verhältnis von Schritt e) zwischen 25:1 und 60:1 liegt.

4. Verfahren nach einem der vorhergehenden Ansprüche, wobei das Béchamelsauce:Windbeutelteig:Eiweiß-Verhältnis zwischen 1:1:2 und 1,2:1,5:3 liegt, bestimmt aus dem Gewicht jeder Zutat in dem Endprodukt.

5. Verfahren nach einem der vorhergehenden Ansprüche, wobei die Béchamelsauce Butter, Mehl, Milch und geriebenen Käse umfasst.

6. Gefrorene herzhafte Soufflézubereitung, die unter Verwendung des Fertigungsverfahrens nach einem der Ansprüche 1 bis 5 erhalten wird.

7. Gefrorene Zubereitung nach Anspruch 6, die außerdem mindestens eine zusätzliche Zutat enthält, die aus Duftstoffen, Geschmacksstoffen (z. B. Fischfond, Kalbsfond), Gewürzen (z. B. Curry, Kreuzkümmel), Gemüsesorten, Konzentraten und Gemüsepürees (beispielsweise Tomate, Artischocke, Spargel, Brokkoli, grüne Bohnen, Kürbis, Ambercup, Marone, Tomatenmark), Fleischsorten (beispielsweise Geflügel), Fisch und Meeresfrüchten (beispielsweise Hummer), Käsesorten (beispielsweise Kuh-, Ziegen-, Schafskäse), Pasta (naturbelassen oder mit Petersilie) und natürlichen Säften (beispielsweise durch Kochen reduziert) ausgewählt ist.

8. Verfahren zur Herstellung eines herzhaften Soufflés aus einer gefrorenen Zubereitung nach Anspruch 6 oder 7, das in dem Backen der gefrorenen Zubereitung bei einer Temperatur, die zwischen 180 und 250 °C liegt, besteht.

9. Verfahren nach Anspruch 8, wobei die gefrorene Zubereitung, die in eine Souffléschale mit einem Durchmesser von 6 bis 10 cm gegeben wurde, gebacken wird, bis das Souffle eine Höhe von 1 bis 6 cm erreicht hat.

10. Herzhaftes Soufflé, das unter Verwendung des Verfahrens nach Anspruch 8 oder 9 erhalten wird.

## Revendications

1. Procédé de fabrication d'une préparation surgelée pour un soufflé salé, comprenant les étapes suivantes :
a) une base est préparée pour une pâte à choux à partir d'au moins les quatre ingrédients suivants : de l'eau ou du lait, de la matière grasse, de la farine et des oeufs;
b) une sauce béchamel est préparée à partir d'au moins les trois ingrédients suivants : de l'eau ou du lait, de la matière grasse et de la farine ;
c) la sauce béchamel obtenue à l'étape b) est incorporée dans la base de pâte à choux obtenue à l'étape a), et le mélange est maintenu dans un bain-marie à une température ne dépassant pas 70°C ;
d) des blancs d'oeufs sont battus en neige ferme ;
e) du sucre et de la gélatine fondue sont incorporés dans les blancs d'oeufs obtenus à l'étape d), ledit sucre étant ajouté dans un rapport blanc d'oeuf : sucre compris entre 25 : 1 et 100 : 1, et ladite gélatine étant ajoutée dans un rapport blanc d'oeuf : gélatine compris entre 20 : 1 et 100 : 1 ;
f) le mélange obtenu à l'étape c) est retiré du bain-marie, et les blancs d'oeufs obtenus à l'étape e) sont incorporés dans ledit mélange chaud ;
g) le mélange obtenu à l'étape f) est placé dans un moule à soufflé ; et
h) la préparation de soufflé est immédiatement surgelée à une température d'au moins -10°C.

2. Procédé selon la revendication 1, dans lequel le rapport en poids blancs d'oeufs : sucre de l'étape e) est compris entre 30 : 1 et 70 : 1.

3. Procédé selon l'une quelconque des revendications précédentes, dans lequel le rapport blancs d'oeufs : gélatine de l'étape e) est compris entre 25 : 1 et 60 : 1.

4. Procédé selon l'une quelconque des revendications précédentes, dans lequel le rapport sauce béchamel : pâte à choux : blancs d'oeufs est compris entre 1 : 1 : 2 et 1,2 : 1,5 : 3, déterminé à partir du poids de chaque ingrédient dans le produit fini.

5. Procédé selon l'une quelconque des revendications précédentes, dans lequel la sauce béchamel comprend du beurre, de la farine, du lait, et du fromage râpé.

6. Préparation de soufflé salé surgelée obtenue en utilisant le procédé de fabrication selon l'une quelconque des revendications 1 à 5.

7. Préparation surgelée selon la revendication 6, comportant également au moins un ingrédient supplémentaire choisi parmi des parfums, des arômes (par exemple un fond de poissons, un fond de veau), des épices (par exemple le cari, le cumin), des légumes, des concentrés, et des purées de légumes (par exemple la tomate, l'artichaut, l'asperge, le brocoli, les haricots verts, la citrouille, la courge, la châtaigne, la pâte de tomates), des viandes (par exemple, la volaille), des poissons et des fruits de mer (par exemple, le homard), des fromages (par exemple, le fromage de vache, de chèvre, de brebis), des pâtes (natures ou avec du persil), et des jus naturels (par exemple, réduits par cuisson).

8. Procédé de préparation d'un soufflé salé à partir d'une préparation surgelée selon la revendication 6 ou 7, qui consiste à cuire ladite préparation surgelée à une température comprise entre 180 et 250°C.

9. Procédé selon la revendication 8, dans lequel la préparation surgelée placée dans un bol à soufflé avec un diamètre allant de 6 à 10 cm est cuite jusqu'à ce que le soufflé atteigne une hauteur allant de 1 à 6 cm.

10. Soufflé salé obtenu en utilisant le procédé selon la revendication 8 ou 9.
